# EUROPÄISCHE PATENTSCHRIFT

(11) **EP 1 677 940 B1**
(45) Veröffentlichungstag und Bekanntmachung des Hinweises auf die Patenterteilung: **27.11.2013**
(21) Anmeldenummer: 04789552.9
(22) Anmeldetag: 21.10.2004
(51) Int. Cl.: B23K 9/09

(54) **VERFAHREN ZUM STEUERN UND/ODER REGELN EINES SCHWEISSPROZESSES UND SCHWEISSGERÄT ZUR DURCHFÜHRUNG EINES SCHWEISSPROZESSES**
METHOD FOR CONTROLLING AND/OR ADJUSTING A WELDING PROCESS AND WELDING DEVICE FOR CARRYING OUT A WELDING PROCESS
PROCEDE POUR PILOTER ET/OU REGLER UN PROCESSUS DE SOUDAGE ET POSTE DE SOUDURE POUR REALISER CE PROCEDE

(30) Priorität: 23.10.2003 AT 16882003
(43) Veröffentlichungstag der Anmeldung: 12.07.2006
(73) Patentinhaber: Fronius International GmbH, 4643 Pettenbach (AT)
(72) Erfinder: ARTELSMAIR, Josef, A-4552 Wartberg/Krems (AT)
(74) Vertreter: Sonn & Partner Patentanwälte
(86) Internationale Anmeldenummer: PCT/AT2004/000363
(87) Internationale Veröffentlichungsnummer: WO 2005/042199

(56) Entgegenhaltungen:
- EP-A- 0 478 796
- WO-A-00/64620
- DE-A- 4 228 589
- DE-A- 19 738 785
- PATENT ABSTRACTS OF JAPAN Bd. 010, Nr. 126 (M-477), 10. Mai 1986 (1986-05-10) & JP 60 255276 A (MITSUBISHI JUKOGYO KK), 16. Dezember 1985 (1985-12-16)
- PATENT ABSTRACTS OF JAPAN Bd. 1995, Nr. 04, 31. Mai 1995 (1995-05-31) & JP 07 009149 A (MATSUSHITA ELECTRIC IND CO LTD), 13. Januar 1995 (1995-01-13)
- SCHMIDT K-P: "NEW REGULATION SYSTEM FOR DOUBLE-PULSE GAS-SHIELDED METAL-ARC WELDING" WELDING AND CUTTING, DEUTSCHER VERLAG FUER SCHWEISSTECHNIK, DUSSELDORF, DE, Nr. 3, 2002, Seite 117, XP001161394

## Beschreibung

Die Erfindung betrifft ein Verfahren zum Steuern und/oder Regeln eines Schweißprozesses bzw. einer Schweißstromquelle mit einer abschmelzenden Elektrode, bei dem nach dem Zünden eines Lichtbogens ein aus mehreren unterschiedlichen Schweißparametern eingestellter Schweißprozess, der von einer Steuervorrichtung gesteuert bzw. geregelt wird, von einer Schweißstromquelle durchgeführt wird und während des Schweißprozesses zumindest eine Schweißprozessphase mit hoher Energieeinbringung und eine Schweißprozessphase mit niedriger Energieeinbringung durch unterschiedliche Werkstoffübergänge und/oder Lichtbogenarten zur Beeinflussung bzw. Steuerung des Wärmehaushaltes, insbesondere der Wärmeeinbringung in das zu bearbeitende Werkstück zyklisch kombiniert werden.

Die Erfindung betrifft weiters ein Schweißgerät mit einer Schweißstromquelle, einer Steuervorrichtung und einem Schweißbrenner, bei dem über eine Ein- und/oder Ausgabevorrichtung am Schweißgerät oder über einen Fernregler die unterschiedlichen Schweißparamter einstellbar sind.

Bei den bekannten Schweißverfahren können über eine Ein- und/oder Ausgabevorrichtung am Schweißgerät sämtliche Parameter eingestellt werden. Dabei wird ein entsprechender Schweißprozess, wie beispielsweise ein Puls-Schweißprozess oder ein Sprühlichtbogen-Schweißprozess oder Kurzlichtbogen-Schweißprozess, ausgewählt und es werden die Parameter entsprechend eingestellt. Zusätzlich ist es oftmals möglich, dass noch ein entsprechender Zündprozess zum Zünden des Lichtbogens ausgewählt werden kann. Wird dann der Schweißvorgang gestartet, so wird nach Zündung des Lichtbogens mit dem eingestellten Zündprozess der eingestellte Schweißprozess, beispielsweise ein Puls-Schweißprozess, durchgeführt. Hierbei ist es möglich, dass während des Schweißvorganges die unterschiedlichen Parameter, wie beispielsweise der Schweißstrom, die Drahtvorschubgeschwindigkeit usw., für diesen ausgewählten Schweißprozess verändert werden: Eine Umschaltung auf einen anderen Schweißprozess, beispielsweise auf einen Sprühlichtbogen-Schweißprozess, ist jedoch nicht möglich. In diesem Fall muss der gerade durchgeführte Schweißprozess, beispielsweise der Puls-Schweißprozess, unterbrochen und durch entsprechende neue Auswahl bzw. Einstellung am Schweißgerät ein anderer Schweißprozess, beispielsweise ein Sprühlichtbogen-Schweißprozess eingeleitet werden.

Die EP 478 796 A1, die JP 60 255276 A, die JP 07 009149 A sowie der Artikel "New regulation system for double-puls gas-shielded metal-arc welding" von Schmidt K-P (Welding und Cutting, Deutscher Verlag für Schweißtechnik, Düsseldorf, DE; 3, 2002: 117; XP001161394) offenbaren Schweißprozesse, bei denen zumindest eine Schweißprozessphase mit hoher Energieeinbringung und eine Schweißprozessphase mit niedriger Energieeinbringung zyklisch kombiniert werden.

Die DE 197 38 785 A1 sowie die WO 00/64620 A zeigen Schweißverfahren, bei welchen die Energieeinbringung über eine Kalt-Metall-Transfer-Phase erfolgt.

Die US 2002/153363 A1 betrifft ein Schweißverfahren mit dem auch extrem schmale Schweißspalte optimal überbrückt werden können und eine gute Schweißqualität erreicht werden kann. Zu diesem Zweck wird die Schmelzrate des Schweißdrahtes in Bezug auf die Fördergeschwindigkeit verändert, wodurch die Wärmeverteilung des Lichtbogens geregelt werden kann. Dies erfolgt in herkömmlicher Art und Weise durch Veränderung von Schweißparametern, wie dem Schweißstrom oder der Drahtfördergeschwindigkeit.

Die US 6 515 259 B1 ist auf ein Schweißverfahren für Aluminium gerichtet, bei dem über Schweißparameter, wie Pulsform, Pulsbreite oder Anstiegsrampe des Schweißstromes, die Wärme des Lichtbogens kontrolliert wird. Dadurch wird die Schweißqualität beim Aluminiumschweißen verbessert.

Schließlich zeigt die JP 04 197579 A ein Schweißverfahren, bei dem in der Startphase vor dem Erzeugen des Lichtbogens eine Vorheizung des Materials über einen Strom durch den Schweißdraht erfolgt. Das beschriebene Verfahren betrifft lediglich die Startphase des Schweißprozesses.

Die Aufgabe der vorliegenden Erfindung besteht in der Schaffung eines oben genannten Verfahrens zum Steuern und/oder Regeln eines Schweißprozesses bzw. einer Schweißstromquelle, bei dem der Wärmehaushalt zum Einbringen von Wärme in das Werkstück eingestellt und/oder geregelt bzw. gesteuert werden kann.

Eine weitere Aufgabe der vorliegenden Erfindung besteht in der Schaffung eines oben genannten Schweißgeräts, mit dem der Wärmehaushalt zum Einbringen von Wärme in das Werkstück eingestellt und/oder geregelt bzw. gesteuert werden kann.

Die erste erfindungsgemäße Aufgabe wird dadurch gelöst, dass als Schweißprozessphase mit niedriger Energieeinbringung eine Kalt-Metall-Transfer-Phase eingesetzt wird, während welcher der Schweißdraht in Richtung des Werkstücks bis zur Berührung mit diesem gefördert wird und anschließend nach Bildung eines Kurzschlusses die Drahtförderung umgekehrt wird und der Schweißdraht bis zu einem vordefinierten Abstand vom Werkstück zurück gefördert wird und dass als Schweißprozessphase mit hoher Energieeinbringung eine Pulsstromphase eingesetzt wird, wobei ein Schweißstrom nach einer Tropfenablöse durch die Pulsstromphase in eine Grundstromphase übergeht, während der der Schweißstrom auf einen Grundwert zur Erhaltung des Lichtbogens abgesenkt wird, und wobei die Kalt-Metall-Transfer-Phase in der Grundstromphase der Pulsstromphase durchgeführt wird. Durch die gezielte zyklische Kombination der Kalt-Metall-Transfer-Phase als Schweißprozessphase mit niedriger Energieeinbringung mit einer Pulsstromphase hoher Energieeinbringung und einer Grundstromphase zwischen der Pulsstromphase und der Kalt-Metall-Transfer-Phase kann der Wärmehaushalt, insbesondere die Wärmeeinbringung in das Werkstück geregelt werden. Nach einer Schweißprozessphase aus beispielsweise mehreren Pulsen eines Puls-Schweißprozesses kann eine Schweißprozessphase eines Kalt-Metall-Transfer Schweißprozesses folgen, bei dem der Schweißdraht bis zur Kontaktierung mit dem Werkstück, also mit dem Schmelzbad bewegt wird und die Tropfenablöse beim Zurückziehen des Schweißdrahtes aus dem Schmelzbad erfolgt. Somit wird in dieser Kalt-Metall-Transfer-Schweißphase wesentlich weniger Energie und somit eine geringere Schweißtemperatur in das Werkstück, also in das Schmelzbad eingebracht, als während der vorhergehenden Puls-Schweißphase. Durch den Aufbau des Schweißprozesses aus unterschiedlichen Schweißprozessphasen, welche zyklisch kombiniert bzw. abgewechselt werden, kann der Wärmehaushalt, insbesondere die Wärmeeinbringung in das Werkstück, gesteuert bzw. geregelt werden. Durch eine geringere Wärmeeinbringung in das Werkstück, insbesondere in zu verschweißende Bleche, kann z.B. der Verzug des Werkstückes wesentlich verringert werden. Ein weiterer Vorteil liegt darin, dass durch die über die Schweißanlage einstellbare Wärmeeinbringung eine optimale Anpassung des Schweißprozesses an die Werkstückanforderungen vom Benutzer getroffen werden kann.

Der Vorteil der Ausgestaltung nach den Ansprüchen 4 und 5 liegt darin, dass das Verhältnis der verschiedenen Schweißprozessphasen des erfindungsgemäßen Schweißverfahrens, also die Dauer einer Schweißphase und/oder die Anzahl der Pulse in einer Schweißphase, je nach benötigter Wärmeeinbringung von der Steuervorrichtung automatisiert verändert werden kann. Beispielsweise kann bei größerer Blechdicke des Werkstückes das Verhältnis so verändert werden, dass die Schweißprozessphase mit höherer Energieeinbringung im Vergleich zu einem Werkstück mit geringerer Dicke entsprechend höher eingestellt ist.

Es ist aber auch eine Ausgestaltung nach den Ansprüchen 6 bis 8 von Vorteil, da dadurch vom Benutzer eine direkte Einstellung des Wärmehaushaltes für den Schweißprozess ermöglicht wird.

Von Vorteil ist aber auch eine Ausgestaltung nach Anspruch 9, da ein aus dem Stand der Technik bekanntes Verfahren das so genannte "Lift-Arc-Prinzip" zum Starten des Schweißprozesses, also zum Zünden des Lichtbogens, verwendet wird. Bei dieser Kontaktzündung wird der Schweißdraht auf das Werkstück aufgesetzt und danach unter Zuschaltung des Schweißstromes leicht abgehoben, wodurch der Lichtbogen gezündet wird.

Durch die Varianten gemäß Anspruch 10 kann in einfacher Form eine Stabilisierung des Lichtbogens geschaffen werden.

Der Vorteil der Ausgestaltung nach Anspruch 11 liegt darin, dass dadurch während der Kalt-Metall-Transfer-Schweißphase eine Abkühlung des Werkstückes erreicht wird und somit über die gesamte Zeitdauer des Schweißverfahrens die Wärmeeinbringung in das Werkstück wesentlich verringert wird.

Von Vorteil ist aber auch eine Ausgestaltung nach Anspruch 12, da dadurch der Schweißprozess wesentlich beschleunigt werden kann. Beispielsweise ist auf diese Weise eine Ausführung ohne wesentliche zeitliche Verzögerung in einer Grundstromphase bei einem Pulsschweißprozess möglich.

Weiters wird die Aufgabe der Erfindung auch durch ein oben genanntes Schweißgerät gelöst, wobei an der Ein- und/oder Ausgabevorrichtung des Schweißgerätes und/oder einem Fernregler zumindest ein Paramter für den Wärmehaushalt oder die Wärmeeinbringung in das zu bearbeitende Werkstück auswählbar und ein Einstellorgan zur Einstellung des Wärmehaushalts bzw. der Wärmeeinbringung in das zu bearbeitende Werkstück über eine zyklische Kombination zumindest einer Schweißprozessphase mit niedriger-Energieeinbringung, welche durch eine Kalt-Metall-Transfer-Schweißprozessphase gebildet ist, während welcher der Schweißdraht in Richtung des Werkstücks bis zur Berührung mit diesem gefördert wird und anschließend nach der Bildung eines Kurzschlusses die Drahtförderung umgekehrt wird und der Schweißdraht bis zu einem vordefinierten Abstand vom Werkstück zurück gefördert wird, wobei an der Ein- und/oder Ausgabevorrichtung eine zyklische Kombination der Kalt-Metall-Transfer-Phase mit einer Pulsstromphase als Schweißprozessphase mit hoher Energieeinbringung einstellbar ist, wobei ein Schweißstrom nach einer Tropfenablöse durch die Pulsstromphase in eine Grundstromphase übergeht, während der der Schweißstrom auf einen Grundwert zur Erhaltung des Lichtbogens abgesenkt wird, und wobei die Kalt-Metall-Transfer-Phase in der Grundstromphase der Pulsstromphase durchgeführt wird.

Weitere vorteilhafte Ausgestaltungen sind in den Ansprüchen 14 bis 20 beschrieben. Die sich daraus ergebenden Vorteile können aus der Beschreibung bzw. aus den zuvor beschriebenen Ansprüchen 1 bis 12 entnommen werden.

Die vorliegende Erfindung wird anhand der beigefügten Zeichnungen näher erläutert.

Darin zeigen:
Fig. 1 eine schematische Darstellung einer Schweißmaschine bzw. eines Schweißgerätes;
Fig. 2 den zeitlichen Verlauf der Schweißspannung eines Beispiels eines erfindungsgemäßen Schweißprozesses;
Fig. 3 den zeitlichen Verlauf des Schweißstromes zur Schweiß-
Fig. 7 den zugehörigen zeitlichen Verlauf des Schweißstromes I;
Fig. 8 den zugehörigen zeitlichen Verlauf der Schweißdrahtgeschwindigkeit;
Fig. 9 die zugehörige schematische Position des Schweißdrahtes in Bezug zum Werkstück in Abhängigkeit der Zeit; und
Fig. 10 die Ein- und/oder Ausgabevorrichtung eines erfindungsgemäßen Schweißgerätes.

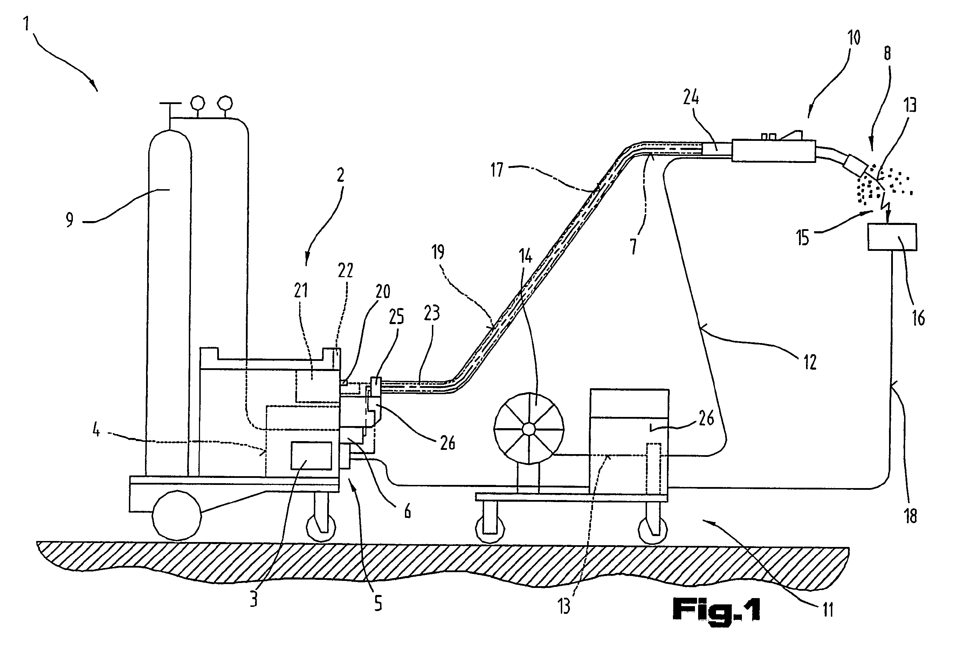

In Fig. 1 ist ein Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 bzw. einem Brenner angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Zusatzwerkstoff bzw. ein Schweißdraht 13 von einer Vorratstrommel 14 bzw. einer Drahtrolle in den Bereich des Schweißbrenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse; integriert ist und nicht, wie in Fig. 1 dargestellt, als Zusatzgerät ausgebildet ist.

Es ist auch möglich, dass das Drahtvorschubgerät 11 den Schweißdraht 13 bzw. den Zusatzwerkstoff außerhalb des Schweißbrenners 10 an die Prozessstelle zuführt, wobei hierzu im Schweißbrenner 10 bevorzugt eine nicht abschmelzende Elektrode angeordnet ist, wie dies beim WIG/TIG-Schweißen üblich ist.

Der Strom zum Aufbauen eines Lichtbogens 15, insbesondere eines Arbeitslichtbogens, zwischen der Elektrode und einem Werkstück 16 wird über eine Schweißleitung 17 vom Leistungsteil 3 der Stromquelle 2 dem Brenner 10, insbesondere der Elektrode, zugeführt, wobei das zu verschweißende Werkstück 16, welches aus mehreren Teilen gebildet ist, über eine weitere Schweißleitung 18 ebenfalls mit dem Schweißgerät 1, insbesondere mit der Stromquelle 2, verbunden ist und somit über den Lichtbogen 15 bzw. den gebildeten Plasmastrahl für einen Prozess ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bewirkt werden kann.

Das Schweißgerät 1 weist des weiteren eine Ein- und/oder Ausgabevorrichtung 22 auf, über welche die unterschiedlichsten Schweißparameter, Betriebsarten oder Schweißprogramme des Schweißgerätes 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert bzw. entsprechende Sollwerte für die Regelung oder Steuerung vorgegeben.

Des weiteren ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine Kupplungsvorrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden. Selbstverständlich ist es möglich, dass die Kupplungsvorrichtung 24 auch für die Verbindung am Schweißgerät 1 eingesetzt werden kann.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte nicht alle zuvor benannten Komponenten verwendet bzw. eingesetzt werden müssen. Beispielsweise ist es auch möglich, dass der Schweißbrenner 10 als luftgekühlter Schweißbrenner 10 ausgeführt wird.

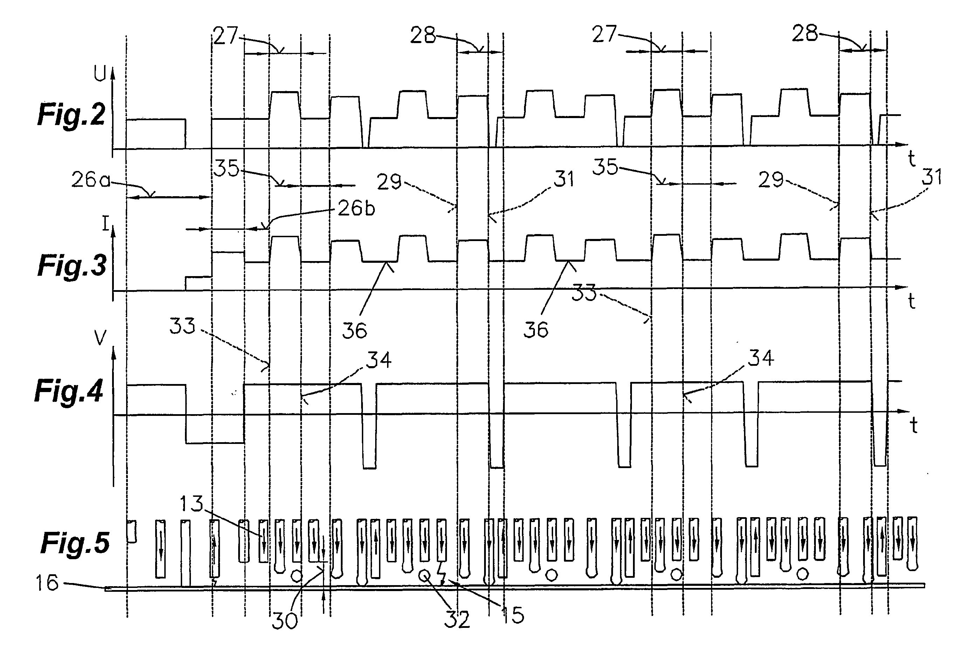

In den Figuren 2 bis 5 ist ein Ausführungsbeispiel eines erfindungsgemäßen Schweißprozesses schematisch dargestellt, welcher aus einer zyklischen Kombination bzw. Abwechslung einer üblichen Schweißprozessphase, insbesondere einer Pulsstromphase, mit einer Kalt-Metall-Transfer-Phase gebildet ist. Während der Kalt-Metall-Transfer-Phase erfolgt ebenso eine Tropfenablöse vom Schweißdraht 13. Dabei zeigt Fig. 2 den zeitlichen Verlauf der Schweißspannung U, Fig. 3 den zeitlichen Verlauf des Schweißstromes I, Fig. 4 den zeitlichen Verlauf der Geschwindigkeit V des Schweißdrahtes 13, und Fig. 5 die schematische Position des Schweißdrahtes 13 in Bezug zum Werkstück 16 in Abhängigkeit der Zeit t.

Der Startvorgang des erfindungsgemäßen Schweißprozesses zum Zünden eines Lichtbogens 15 wird beispielsweise in Form des so genannten Lift-Arc-Prinzips 26a durchgeführt. Hierbei wird beim Start des Zündvorgangs der Schweißdraht 13 in Richtung Werkstück 16 bewegt und gleichzeitig ein begrenzt erhöhter Schweißstrom I angelegt, um eine Anschmelzung des Schweißdrahtes 13 am Werkstück 16 bei der erstmaligen Kontaktierung zu verhindern. Bei der erstmaligen Kontaktierung, also bei einem Kurzschluss, wird der Schweißstrom I beispielsweise nochmals erhöht, wobei wiederum ein Anschmelzen des Schweißdrahtes 13 verhindert wird. Bei der Rückwärtsbewegung des Schweißdrahtes 13 wird beim Abheben vom Werkstück 16 ein Lichtbogen 15 erzeugt und der Schweißdraht 13 wird auf einen vorgegebenen Abstand zum Werkstück 16 bewegt, wobei wiederum eine Richtungsumkehr der Drahtförderung vorgenommen wird.

Nach dem Zünden des Lichtbogens 15 ist es auch möglich, dass vor dem eigentlichen Schweißprozess eine erste kurze Prozessphase 26b mit erhöhter Energieeinbringung über eine definierte Zeitdauer und anschließend der aus zyklisch kombinierten Schweißprozessphasen aufgebaute Schweißprozess durchgeführt wird. Dies hat den Vorteil, dass durch diese kurze Prozessphase 26b mit hoher Energieeinbringung eine Stabilisierung des Lichtbogens 15 geschaffen wird. Des weiteren wird der Schweißdraht 13 durch den Zündprozess erwärmt und dadurch kann der nachfolgende Schweißprozess mit vorerwärmtem Schweißdraht 13 beginnen, wodurch die Schweißqualität wesentlich verbessert wird.

Wesentlich bei dem erfindungsgemäßen Schweißprozess ist, dass durch das zyklische Kombinieren mindestens zweier unterschiedlicher Schweißprozessphasen mit unterschiedlichen Werkstoffübergängen und/oder Lichtbogenarten der Wärmehaushalt, insbesondere die Wärmeeinbringung in ein Werkstück 16, beeinflusst bzw. gesteuert wird. Bei dem Schweißprozess wird eine Schweißprozessphase mit hoher Energieeinbringung mit einer Schweißprozessphase mit geringer Energieeinbringung, insbesondere einer Kalt-Metall-Transfer-Phase abgewechselt, um den Wärmehaushalt des Werkstückes 16 gezielt zu steuern und zu beeinflussen.

Bei dem dargestellten Ausführungsbeispiel des Schweißprozesses gemäß den Figuren 2 bis 5 wird eine Puls-Stromphase 27 mit einer Kalt-Metall-Transfer-Phase 28 zyklisch kombiniert. Auf eine detaillierte Beschreibung der Pulsstromphase 27 wird verzichtet, da diese bereits aus dem Stand der Technik bekannt ist. Lediglich wird erwähnt, dass die Pulsstromphase 27 durch Anlegen eines Stromimpulses eine Tropfenablöse vom Schweißdraht 13 durchführt und anschließend in die Grundstromphase 35 übergeht. Speziell beim Einsatz der zyklischen Kombination der Pulsstromphase 27 mit der Kalt-Metall-Transfer-Phase 28 ist es möglich, dass die Kalt-Metall-Transfer-Phase 28 in der Grundstromphase 35 der Pulsstromphase 27 durchgeführt wird, d.h., dass nach der Tropfenablöse durch die Pulsstromphase 27 der Schweißstrom I abgesenkt wird und in die Grundstromphase 35 übergeht, worauf nunmehr in der Grundstromphase 35 die Kalt-Metall-Transfer-Phase 28 durchgeführt wird und daraufhin wiederum in die Pulsstromphase 27 übergegangen wird.

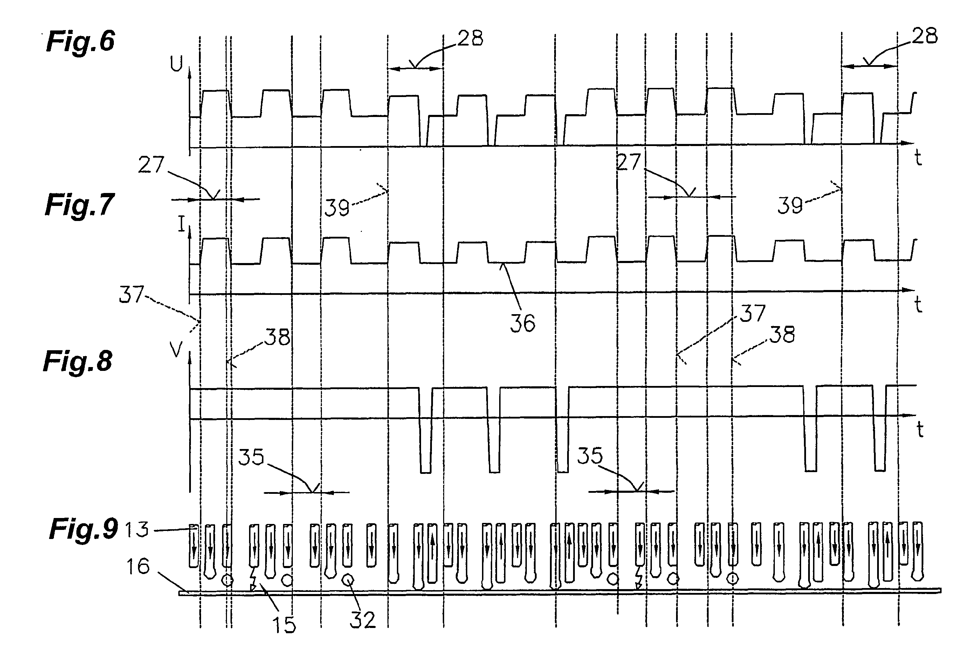

Wie anschließend anhand der Fig. 6 bis 9 näher beschrieben, ist es möglich, dass die zyklische Kombination der unterschiedlichen Schweißprozessphasen durch mehrere aufeinanderfolgende gleiche Schweißprozessphasen eines Schweißprozesses, beispielsweise der Pulsstromphase, durchgeführt werden und erst zu einem vorgegebenen Zeitpunkt die zumindest eine weitere Schweißprozessphase, beispielsweise die Kalt-Metall-Transferphase 28, ein oder mehrere Male hintereinander durchgeführt wird.

Während der Kalt-Metall-Transfer-Phase 28 wird der Schweißdraht 13 von einer Ausgangsposition, also einem Abstand 30, in Richtung des Werkstückes 16 bewegt, wie dies ab einem Zeitpunkt 29 ersichtlich ist. Der Schweißdraht 13 wird bis zur Berührung mit dem Werkstück 16 zum Zeitpunkt 31 in Richtung Werkstück 16 bewegt. Nach Bildung eines Kurzschlusses wird die Drahtförderung umgekehrt und der Schweißdraht 13 bis zu dem vordefinierten Abstand 30, also bevorzugt wiederum in die Ausgangsposition, vom Werkstück 16 wegbewegt. Um eine Tropfenbildung bzw. ein Anschmelzen des Schweißdrahtendes während der Kalt-Metall-Transfer-Phase 28 durch die Durchführung des Prozesses während der Grundstromphase 35 beim Puls-Schweißprozess zu erreichen, wird während der Vorwärtsbewegung des Schweißdrahtes 13 in Richtung des Werkstückes 16 der Schweißstrom I gegenüber dem Grundstrom der Grundstromphase 35 verändert, insbesondere erhöht, wie dies zum Zeitpunkt 29 ersichtlich ist. Bei einer Abwechslung der Kalt-Metall-Transfer-Phase 28 mit einer anderen Schweißprozessphase wird der Strom I derart geregelt, dass bei der Vorwärtsbewegung des Schweißdrahtes 13 eine Anschmelzung stattfindet. Aufgrund des Eintauchens des Schweißdrahtes 13 in das Schmelzbad und der folgenden Rückwärtsbewegung des Schweißdrahtes 13 wird der Tropfen 32 bzw. das angeschmolzene Material vom Schweißdraht 13 abgelöst (nicht dargestellt). Hierbei ist es selbstverständlich auch möglich, dass zur Unterstützung der Tropfenablöse eine impulsartige Erhöhung des Schweißstromes I durchgeführt wird.

Weiters ist es möglich, dass während der Kalt-Metall-Transfer-Phase 28 die Drahtvorschubgeschwindigkeit V verändert, insbesondere erhöht, wird, um eine schnellere Durchführung des Schweißprozesses in der Kalt-Metall-Transfer-Phase 28 zu gewährleisten.

Der Ablauf des Schweißprozesses erfolgt beim dargestellten Ausführungsbeispiel entsprechend den Fig. 2 bis 5 zusammengefasst derartig, dass zu einem Zeitpunkt 33, also nach dem Startvorgang, die Pulsstromphase 27 eingeleitet wird, also der Schweißstrom I erhöht wird, um eine Tropfenbildung am Schweißdrahtende zu erhalten. Der Schweißstrom I wird lange genug aufrecht erhalten, um ein Ablösen des Tropfens 32 vom Schweißdraht 13 zu gewährleisten. Selbstverständlich ist es auch möglich, durch einen kurzen höheren Stromimpuls I den Tropfen 32 vom Schweißdraht 13 abzulösen. Nach Beendigung der Pulsstromphase 27 entsprechend dem Zeitpunkt 34 wird in der Grundstromphase 35 der Schweißstrom I auf einen Grundwert 36 abgesenkt, wodurch der Lichtbogen 15 aufrecht erhalten bleibt. Anschließend wird nach Ablauf einer voreinstellbaren Zeitdauer in der Grundstromphase 35 die Kalt-Metall-Transfer-Phase 28 eingeleitet. Nach Abschluss der Kalt-Metall-Transfer-Phase 28, wird die Grundstromphase 35 bevorzugt über eine vorgegebene Zeitdauer weiter aufrecht erhalten, worauf anschließend wiederum eine Pulsstromphase 27 eingeleitet wird und eine zyklische Wiederholung der beiden Schweißprozessphasen durchgeführt wird.

Durch die kombinierten Schweißprozessphasen kann wesentlich Einfluss auf den Wärmehaushalt genommen werden. Dies erfolgt dadurch, dass die Energie des Impulses, insbesondere der Schweißstrom I, während der Kalt-Metall-Transfer-Phase 28 geringer ist, als die Energie des Impulses, insbesondere der Schweißstrom I, während der Pulsstromphase 27. Speziell wird somit während der Kalt-Metall-Transfer-Phase 28 ein sehr kalter Werkstoffübergang erzielt, da die Tropfenablöse mit sehr geringem Strom I, der lediglich zum Wiederzünden des Lichtbogens 15 notwendig ist, erfolgt, so dass nur geringfügige Wärme in das Werkstück 16 eingebracht wird. Damit kann nunmehr eine entsprechende Abkühlung am Werkstück 16 realisiert werden, so dass eine Steuerung bzw. Regelung des Wärmehaushalts bzw. der Wärmeeinbringung in das Werkstück 16 ermöglicht wird.

Ein weiteres Ausführungsbeispiel wird anhand der Fig. 6 bis 9 beschrieben. Bei diesem Schweißprozess folgen auf drei aufeinander folgende Pulsstromphasen 27 drei aufeinander folgende Kalt-Metall-Transfer-Phasen 28. Daraus ist nunmehr ersichtlich, dass mehrere gleiche Schweißprozessphasen eines Schweißprozesses hintereinander durchgeführt werden können, worauf eine oder mehrere Schweißprozessphasen eines weiteren unterschiedlichen Schweißprozesses durchgeführt werden, wobei sich der Vorgang zyklisch wiederholt.

Grundsätzlich ist es auch möglich, dass durch Erfassen der Temperatur des Werkstückes 16 und durch Vorgabe einer definierten Wärmeeinbringung am Schweißgerät 1 eine automatische Umschaltung von einer auf die weitere Schweißprozessphase zur Regelung des Wärmehaushalts erfolgen kann, d.h., dass an die Steuervorrichtung 4 des Schweißgerätes 1 die Temperatur des Werkstückes 16 geleitet wird, worauf von dieser festgelegt wird, ob eine Umschaltung auf die Kalt-Metall-Transfer-Phase zur Abkühlung des Werkstückes 16 erfolgen soll.

Bei dem Ausführungsbeispiel gemäß den Fig. 6 bis 9 wird nunmehr zu einem Zeitpunkt 37 die Pulsstromphase 27 durch Erhöhung des Schweißstromes I gestartet. Durch die Erhöhung wird eine Tropfenbildung am Schweißdrahtende erreicht. Nach einer bestimmten, definierten Zeit (Zeitpunkt 38) löst sich der Tropfen 32 vom Schweißdraht 13 ab, danach ist die Pulsstromphase 27 beendet, und eine Grundstromphase 35 beginnt. In der Grundstromphase 35 ist der Schweißstrom I auf einen Grundwert 36 abgesenkt, um den Lichtbogen 15 aufrecht zu erhalten. Nach drei aufeinander folgenden Pulsstromphasen 27 und Grundstromphasen 35 wird zu einem Zeitpunkt 39 die Kalt-Metall-Transfer-Phase 28 gestartet und der Schweißstrom I begrenzt erhöht. Der Schweißdraht 13 wird nunmehr in Richtung des Werkstückes 16 bis zur Kontaktierung mit dem Werkstück 16, also bis zu einem Kurzschluss, bewegt. Die Tropfenablösung erfolgt nunmehr derartig, dass bei der Rückwärtsbewegung des Schweißdrahtes 13, also nach dem Auftritt des Kurzschlusses, der Tropfen 32 am Schweißdrahtende aufgrund der Oberflächenspannung des Schmelzbades abgezogen wird, also der Tropfen 32 durch die Rückwärtsbewegung des Schweißdrahtes 13 von diesem regelrecht heruntergezogen wird. Hierbei ist es selbstverständlich möglich, dass zur Unterstützung der Tropfenablöse eine Erhöhung, insbesondere eine impulsartige Erhöhung des Schweißstromes I durchgeführt werden kann. Nach der Tropfenablösung wird der Schweißdraht 13 wieder zurück zur Ausgangsposition, also bis auf den Abstand 30 zurückbewegt, wobei aufgrund einer geringen Strombeaufschlagung nach dem Lösen des Tropfens 32 bzw. dem Abheben des Schweißdrahtes 13 vom Werkstück 16 eine automatische Zündung des Lichtbogens 15 erfolgt. Bei diesem Ausführungsbeispiel erfolgen, wie oben schon beschrieben, drei Kalt-Metall-Transfer-Phasen 28 hintereinander, wodurch wesentlich weniger Wärme in dieser Zeitspanne in das Werkstück 16 eingebracht wird und somit der Wärmehaushalt während der Schweißung beeinflusst werden kann. Dadurch wird das Werkstück 16 geringeren Spannungen ausgesetzt und somit auch der Verzug des Werkstückes 16 wesentlich verringert.

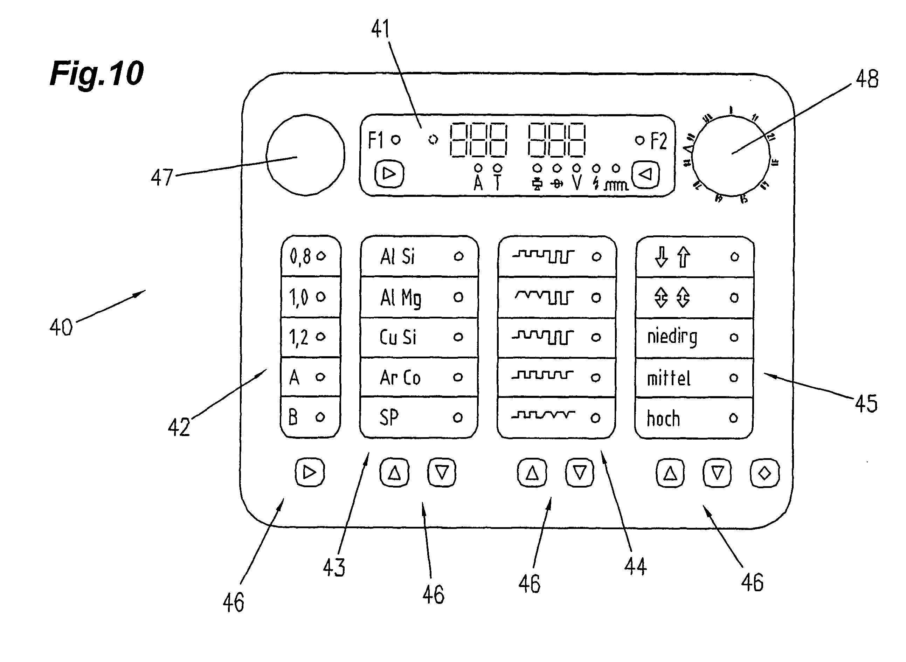

Eine spezielle Ausbildung eines Schweißgerätes 1 zur Anwendung bzw. Einstellung für einen aus zumindest zwei unterschiedlichen Phasen aufgebauten Schweißprozess ist nachstehend anhand Fig. 10 beschrieben. Das Schweißgerät 1 besteht aus einer Schweißstromquelle bzw. Stromquelle 2, einer Steuervorrichtung 4 und einem Schweißbrenner 10. Über eine Ein- und/oder Ausgabevorrichtung 40 sind am Schweißgerät 1 oder über einen Fernregler die unterschiedlichen Schweißparamter einstellbar. An dieser Ein- und/oder Ausgabevorrichtung 40 des Schweißgerätes und/oder einem Fernregler kann zumindest ein Parameter für den Wärmehaushalt oder die Wärmeeinbringung in das zu bearbeitende Werkstück ausgewählt werden und/oder ein Einstellorgan zur Einstellung des Wärmehaushalts bzw. der Wärmeeinbringung in das zu bearbeitende Werkstück über eine zyklische Kombination zumindest zweier Schweißprozessphasen angeordnet sein. Die eingestellten Parameter werden an die Steuervorrichtung 4 des Schweißgerätes 1 weitergeleitet und von dieser ein entsprechender Schweißprozess gesteuert bzw. geregelt. In der Ein- und/oder Ausgabevorrichtung 40 können die unterschiedlichsten Parameter für den Schweißprozess, wie beispielsweise der Schweißstrom I und/oder die Schweißspannung U und/oder die Drahtfördergeschwindigkeit V und/oder ein Schweißparameter für die Wärmeeinbringung und/oder das Material der zu verschweißenden Werkstücke 16 und/oder das Material des Schweißdrahtes 13 und/oder das verwendete Schweißgas eingestellt werden. Darüber hinaus sind Auswahl- oder Einstellorgane 46 zur Einstellung der Parameter zumindest zweier während des Schweißprozesses zyklisch abwechselnder Schweißprozessphasen zur Einstellung und/oder Regelung bzw. Steuerung des Wärmehaushalts bzw. der Wärmeeinbringung in das zu bearbeitende Werkstück 16 angeordnet. Das Verhältnis der Schweißprozessphasen, also z.B. die Anzahl der Impulse einer Pulsstromphase zu einer Anzahl der Impulse einer Kalt-Metall-Transfer-Phase bzw. die Zeitdauer für die erste Schweißprozessphase zur zweiten Schweißprozessphase, wird durch Einstellen der Parameter auf dem Schweißgerät 1 gesteuert. Somit wird ein wärmeoptimierter Schweißprozess durch einfaches Einstellen bekannter Schweißparameter durchgeführt bzw. gesteuert.

Auf einer Anzeige 41 können die vorgenommenen Einstellungen abgelesen werden. Die Einstellung erfolgt bei der dargestellten Ein- und/oder Ausgabevorrichtung 40 über Auswahl- oder Einstellorgane 46, 47, 48, welche durch Tasten, Drehschalter oder Potentiometer gebildet sein können. Beispielsweise kann mit ersten Tastern 46 die Dicke für den Schweißdraht 13 eingestellt und von der Anzeige 42 die entsprechende Einstellung angezeigt werden. Mit einer zweiten Anordnung von Tasten 46 kann beispielsweise das Material des Schweißdrahtes 13 ausgewählt werden, und über die Anzeige 43 die eingestellte Materialkombination angezeigt werden. Über eine dritte Tastenkombination 46 wird die Art des Schweißprozesses durch Abwechslung verschiedener Schweißprozessphasen eingestellt und auf der Anzeige 44 dargestellt. Schließlich erfolgt über eine weitere Tastenkombination 46 eine Auswahl des Wärmehaushalts, also der Wärmeinbringung, in das Werkstück 16, welche auf der Anzeige 45 dargestellt wird. An der Anzeige 44 können folgende zyklisch abwechselnde Schweißprozessphasen dargestellt sein: Pulsstromphase und Kalt-Metall-Transfer-Phase, Kurzlichtbogenphase und Kalt-Metall-Transfer-Phase, Sprühlichtbogenschweißphase und Kalt-Metall-Transfer-Schweißphase, Pulsstromphase und Sprühlichtbogenschweißphase, und Pulsstromphase und Kurzlichtbogenschweißphase. Natürlich sind weitere Zusammenstellungen von verschiedenen Schweißprozessphasen möglich.

Mit einem Regler 47 kann beispielsweise die Stromstärke I oder die Schweißspannung U, die Drahtvorschubgeschwindigkeit V, usw., individuell verändert werden. Mit einem weiteren Regler 48 kann beispielsweise die Zeitdauer einer ersten Schweißprozessphase, z.B. einer Sprühlichtbogenschweißphase, zu einer zweiten Schweißprozessphase, z.B., einer Kalt-Metall-Transfer-Phase, und/oder die Anzahl der Pulse einer Pulsstromphase vor dem Wechsel zu der Kalt-Metall-Transfer-Phase eingestellt werden. Somit kann der Benutzer festlegen, wie lange die erste und zweite Phase des Schweißprozesses durchgeführt werden soll bzw. wie viele Pulse die jeweilige Schweißprozessphase durchführt, bevor auf die weitere Schweißprozessphase gewechselt wird. Somit kann die Zeitdauer bzw. die Anzahl der Pulse der Schweißprozessphasen mit hoher Energieeinbringung vor dem Wechsel zu einer Phase mit niedriger Energieeinbringung frei eingestellt werden.

Eine Einstellung des Wärmehaushalts bzw. der Wärmeeinbringung in das Werkstück 16 kann aber auch derart erfolgen, dass der Benutzer einen üblichen Schweißprozess einstellt, und durch zusätzliches Einstellen eines weiteren Parameters, wie der an der Anzeige 45 dargestellten und über Tasten 46 auswählbaren Wärmeeinbringung, den Wärmehaushalt festlegen. Hierbei kann der Benutzer durch Auswahl an der Anzeige 45 in einfacher Form festlegen, ob beispielsweise eine niedrige, mittlere oder hohe Wärmeeinbringung stattfinden soll, so dass von der Steuervorrichtung 4 eine entsprechende Steuerung bzw. Regelung vorgenommen wird. Dabei sind zu den einzelnen Auswahlmöglichkeiten entsprechende Daten bzw. Berechnungsmodelle hinterlegt, so dass eine automatische Festlegung möglich ist.

Es ist aber auch möglich, dass beispielsweise mit dem Regler 48 die prozentuell gewünschte Wärmeeinbringung ins Werkstück 16 geregelt wird. Die Steuervorrichtung 4 regelt das Verhältnis der Phasen mit niedriger Energieeinbringung zu den Phasen mit hoher Energieeinbringung. Am Regler 48 kann eine entsprechende Skalierung vorhanden sein, wodurch der Benutzer durch einfache Auswahl die Wärmeeinbringung einstellen kann. Somit regelt die Steuervorrichtung 4 das Verhältnis des Schweißverfahrens mit niedriger Energieeinbringung zu dem bzw. den Schweißverfahren mit hoher Energieeinbringung.

Des weiteren kann die Zeitdauer der einzelnen Schweißphasen in Abhängigkeit von der Schweißstromhöhe I, insbesondere direktproportional zum Schweißstrom bzw. zur eingestellten Leistung am Schweißgerät 1 gesteuert werden. Dies kann so erfolgen, dass je nach der an der Ein- und/oder Ausgabevorrichtung 40 eingestellten Leistung bzw. des eingestellten Stromes über den Regler 47 von der Steuervorrichtung 4 das Verhältnis zwischen der Pulsstromphase 27 und der Kalt-Metall-Transfer-Phase 28, verändert wird. Beispielsweise erfolgt dies derartig, dass bei geringer Leistungseinstellung, also geringem Strom, wie beispielsweise 50A, und bei einem aus Pulsstromphasen und Kalt-Metall-Transfer-Phasen gebildeten Schweißprozesses eine geringere Anzahl von Pulsstromphasen 27 mit hoher Wärmeeinbringung gegenüber einer höheren Anzahl von Kalt-Metall-Transfer-Phasen 28 durchgeführt werden. Somit wird eine geringere Wärmemenge ins Werkstück 16 eingebracht. Erhöht der Benutzer jedoch die Leistung, also den Strom beispielsweise auf 100A, so wird eine größere Anzahl von Pulsstromphasen 27 gegenüber den Kalt-Metall-Transfer-Phasen 28 durchgeführt, wodurch mehr Wärme in das Werkstück 16 eingebracht wird. Das Verhältnis der einzelnen Phasen des Schweißprozesses kann im Schweißgerät 1 hinterlegt sein, so dass vom Benutzer lediglich eine Leistungseinstellung vorgenommen werden muss, worauf von der Steuervorrichtung 4 das Verhältnis der beiden abwechselnden Schweißprozessphasen festgelegt wird.

Beispielsweise ist es auch möglich, dass in einem im Schweißgerät 1 integrierten Speicher Daten für den jeweiligen Schweißprozess hinterlegt sind und die Steuervorrichtung 4 das Schweißverfahren nach diesen Daten steuert. Somit sind vom Benutzer nur eine geringfügige Anzahl an Einstellungen vor dem Schweißprozess zu treffen, die Steuervorrichtung 4 regelt den Schweißprozess dann selbstständig. Speziell wird dabei der Wärmehaushalt bzw. die Wärmeeinbringung in das Werkstück 16 durch die Materialwahl des Schweißdrahtes 13 und der zu verschweißenden Werkstücke 16 festgelegt. Dabei können für die unterschiedlichsten Materialien für den Schweißdraht 13 und die Werkstücke 16 entsprechende Werte im Speicher hinterlegt sein, so dass von der Steuervorrichtung 4 je nach Materialwahl das Verhältnis der abwechselnden Phasen des Schweißprozesses festlegt wird. Beispielsweise wird für einen Schweißprozess für Aluminium eine geringere Wärmeeinbringung in das Werkstück 16 benötigt, als dies für einen Stahl-Schweißprozess notwendig ist. Somit sind für Aluminium geringere Werte hinterlegt, als für Stahl.

Natürlich ist es auch möglich, die Auslösung zur Ausführung der Kalt-Metall-Transfer-Phase 28 durch Angabe der Anzahl der Pulse bei der Pulsstromphase 27 oder aber auch durch Vorgabe oder Definition einer Zeitdauer oder durch ein Triggersignal durchzuführen.

Selbstverständlich ist es möglich, dass die einzelnen zuvor beschriebenen Einstellmöglichkeiten untereinander kombiniert werden bzw. mehrere Einstellmöglichkeiten am Schweißgerät 1 vorgesehen sind.

## Patentansprüche

1. Verfahren zum Steuern und/oder Regeln eines Schweißprozesses bzw. einer Schweißstromquelle, mit einem Schweißdraht, bei dem nach dem Zünden eines Lichtbogens ein aus mehreren unterschiedlichen Schweißparametern eingestellter Schweißprozess, der von einer Steuervorrichtung gesteuert bzw. geregelt wird, von einer Schweißstromquelle durchgeführt wird, und während des Schweißprozesses zumindest eine Schweißprozessphase mit hoher Energieeinbringung und eine Schweißprozessphase mit niedriger Energieeinbringung durch unterschiedliche Werkstoffübergänge und/oder Lichtbogenarten zur Beeinflussung bzw. Steuerung des Wärmehaushalts, insbesondere der Wärmeeinbringung in das zu bearbeitende Werkstück (16) zyklisch kombiniert werden, **dadurch gekennzeichnet, dass** als Schweißprozessphase mit niedriger Energieeinbringung eine Kalt-Metall-Transfer-Phase (28) eingesetzt wird, während welcher der Schweißdraht (13) in Richtung des Werkstücks (16) bis zur Berührung mit diesem gefördert wird, und anschließend nach der Bildung eines Kurzschlusses die Drahtförderung umgekehrt wird und der Schweißdraht (13) bis zu einem vordefinierten Abstand (30) vom Werkstück (16) zurückgefördert wird, und dass als Schweißprozessphase mit hoher Energieeinbringung eine Pulsstromphase (27) eingesetzt wird, wobei ein Schweißstrom (I) nach einer Tropfenablöse durch die Pulsstromphase (27) in eine Grundstromphase (35) übergeht, während der der Schweißstrom (I) auf einen Grundwert zur Erhaltung des Lichtbogens abgesenkt wird, und wobei die Kalt-Metall-Transfer-Phase (28) in der Grundstromphase (35) der Pulsstromphase (27) durchgeführt wird.

2. Verfahren nach Anspruch 1, **dadurch gekennzeichnet, dass** während der Förderung des Schweißdrahtes (13) in Richtung des Werkstückes (16) der Schweißstrom (I) verändert, insbesondere erhöht wird und dadurch eine Tropfenbildung bzw. ein Anschmelzen des Schweißdrahtendes erreicht wird.

3. Verfahren nach Anspruch 1 oder 2, **dadurch gekennzeichnet, dass** der Schweißdraht (13) nach der Berührung des Werkstückes (16) zurückbewegt wird, wodurch der Tropfen (32) bzw. das angeschmolzene Material vom Schweißdraht (13) abgelöst wird.

4. Verfahren nach einem der Ansprüche 1 bis 3, **dadurch gekennzeichnet, dass** die Dauer der einzelnen Schweißprozessphasen in Abhängigkeit des eingestellten Schweißstromes (I), insbesondere direktproportional zum eingestellten Schweißstrom (I) bzw. einer eingestellten Leistung gesteuert wird.

5. Verfahren nach einem der Ansprüche 1 bis 4, **dadurch gekennzeichnet, dass** das Verhältnis zwischen der Schweißprozessphase mit hoher Energieeinbringung und der Schweißprozessphase mit niedriger Energieeinbringung in Abhängigkeit des Schweißstromes (I) bzw. einer eingestellten Leistung verändert wird.

6. Verfahren nach einem der Ansprüche 1 bis 5, **dadurch gekennzeichnet, dass** zumindest ein Schweißparameter der Wärmeeinbringung in das zu bearbeitende Werkstück (16) am Schweißgerät (1) ausgewählt bzw. eingestellt wird, wobei je nach ausgewähltem bzw. eingestelltem Wert der Wärmeeinbringung das Verhältnis zwischen der Schweißprozessphase mit hoher Energieeinbringung und der Schweißprozessphase mit niedriger Energieeinbringung automatisch festgelegt und geregelt wird.

7. Verfahren nach einem der Ansprüche 1 bis 6, **dadurch gekennzeichnet, dass** das Verhältnis der zyklisch abwechselnden Schweißprozessphasen in Abhängigkeit der Parameter für den Schweißprozess, wie beispielsweise einem Schweißstrom (I) und/oder einem Parameter für die Wärmeeinbringung und/oder dem Material des zu bearbeitenden Werkstücks (16) und/oder dem Material des Schweißdrahtes (13) und/oder dem verwendeten Schweißgas ermittelt wird.

8. Verfahren nach einem der Ansprüche 1 bis 7, **dadurch gekennzeichnet, dass** die Schweißprozessphase (28) mit niedriger Energieeinbringung durch Angabe der Anzahl der Pulse bei der Pulsstromphase (27) oder durch Vorgabe einer Zeitdauer oder durch ein Triggersignal ausgelöst wird.

9. Verfahren nach einem der Ansprüche 1 bis 8, **dadurch gekennzeichnet, dass** der Schweißprozess entsprechend dem so genannten Lift-Arc Prinzip gestartet wird.

10. Verfahren nach einem der Ansprüche 1 bis 9, **dadurch gekennzeichnet, dass** nach der Zündung des Lichtbogens (15) und vor dem zyklischen Abwechseln der zumindest zwei unterschiedlichen Schweißprozessphasen über eine definierte Zeitdauer eine zusätzliche Schweißprozessphase mit hoher Energieeinbringung stattfindet.

11. Verfahren nach einem der Ansprüche 1 bis 10, **dadurch gekennzeichnet, dass** die Energieeinbringung, insbesondere der Schweißstrom (I) während der Kalt-Metall-Transfer-Phase (28) geringer ist, als die Energieeinbringung, insbesondere der Schweißstrom (I), während der Pulsstromphase (27).

12. Verfahren nach einem der Ansprüche 1 bis 11, **dadurch gekennzeichnet, dass** während der unterschiedlichen Schweißprozessphasen die Drahtvorschubgeschwindigkeit verändert wird.

13. Schweißgerät (1), mit einer Schweißstromquelle (2), einer Steuervorrichtung (4), einem Schweißbrenner (10) und einem Schweißdraht (13), bei dem über eine Ein- und/oder Ausgabevorrichtung (40) am Schweißgerät oder über einen Fernregler die unterschiedlichen Schweißparameter einstellbar sind, **dadurch gekennzeichnet, dass** an der Ein- und/oder Ausgabevorrichtung (40) des Schweißgerätes und/oder dem Fernregler ein Einstellorgan zur Einstellung des Wärmehaushalts bzw. der Wärmeeinbringung in das zu bearbeitende Werkstück (16) über eine zyklische Kombination zumindest einer Schweißprozessphase mit niedriger Energieeinbringung und einer Schweißprozessphase mit hoher Energieeinbringung angeordnet ist, wobei die Schweißprozessphase mit niedriger Energieeinbringung durch eine Kalt-Metall-Transfer-Phase (28) gebildet ist, während welcher der Schweißdraht (13) in Richtung des Werkstücks (16) bis zur Berührung mit diesem gefördert wird, und anschließend nach der Bildung eines Kurzschlusses die Drahtförderung umgekehrt wird und der Schweißdraht (13) bis zu einem vordefinierten Abstand (30) vom Werkstück (16) zurückgefördert wird, wobei die Schweißprozessphase mit hoher Energieeinbringung durch eine Pulsstromphase (27) gebildet ist, wobei ein Schweißstrom (I) nach einer Tropfenablöse durch die Pulsstromphase (27) in eine Grundstromphase (35) übergeht, während der der Schweißstrom (I) auf einen Grundwert zur Erhaltung des Lichtbogens abgesenkt wird, und wobei die Kalt-Metall-Transfer-Phase (28) in der Grundstromphase (35) der Pulsstromphase (27) durchgeführt wird.

14. Schweißgerät nach Anspruch 13, **gekennzeichnet durch** eine Ausführungsform zur Durchführung des Verfahrens nach einem oder mehreren der Ansprüche 1 bis 12.

15. Schweißgerät nach Anspruch 13 oder 14, **dadurch gekennzeichnet, dass** ein weiteres Auswahl- oder Einstellorgan (46) zur Auswahl der zu verwendenden Schweißprozessphasen angeordnet ist.

16. Schweißgerät nach einem der Ansprüche 13 bis 15, **dadurch gekennzeichnet, dass** zumindest eine Anzeige (42, 43, 44, 45) zur Darstellung der ausgewählten Schweißparameter und bzw. oder der ausgewählten Schweißprozessphasen, angeordnet ist.

17. Schweißgerät nach einem der Ansprüche 13 bis 16, **dadurch gekennzeichnet, dass** ein Auswahl- oder Einstellorgan (46) zur Auswahl des Materials des zu bearbeitenden Werkstücks (16) angeordnet ist.

18. Schweißgerät nach einem der Ansprüche 13 bis 17, **dadurch gekennzeichnet, dass** ein Auswahl- oder Einstellorgan (46) zur Auswahl des Materials des verwendeten Schweißdrahtes (13) angeordnet ist.

19. Schweißgerät nach einem der Ansprüche 13 bis 18, **dadurch gekennzeichnet, dass** ein Auswahl- oder Einstellorgan (48) zur Einstellung des Verhältnisses der ausgewählten Schweißprozessphasen, insbesondere der Zeitdauer der jeweiligen Schweißprozessphase angeordnet ist.

20. Schweißgerät nach einem der Ansprüche 16 bis 19, **dadurch gekennzeichnet, dass** ein Speicher zur Hinterlegung von Schweißparametereinstellungen angeordnet ist.

## Claims

1. A method for controlling and/or regulating a welding process or a welding current source using a welding wire, in which a welding process adjusted on the basis of a plurality of different welding parameters and controlled or regulated by a control device is carried out by a welding current source after the ignition of an electric arc, and at least one welding process phase having a high energy input and a welding process phase having a low energy input resulting from different material transitions and/or electric arc types are cyclically combined during the welding process to influence or control the heat balance and, in particular, the heat input into the workpiece (16) to be worked, **characterized in that** a cold-metal-transfer phase (28) is used as said welding process phase having a low energy input, during which the welding wire (13) is conveyed in the direction of the workpiece (16) until contacting the same, and the wire conveyance is subsequently reversed after the creation of a short circuit, and the welding wire (13) is conveyed back as far as to a predefined distance (30) from the workpiece (16), and **in that** a pulse current phase (27) is used as said welding process phase having a high energy input, wherein after a detachment of a droplet due to the pulse current phase (27), a welding current phase (I) passes to a base current phase (35), during which the welding current (I) is lowered to a base value to obtain the electric arc, and wherein the cold-metal-transfer phase (28) is carried out in the base current phase (35) of the pulse current phase (27).

2. The method according to Claim 1, **characterized in that**, during the conveyance of the welding wire (13) in the direction of the workpiece (16), the welding current (I) is changed, particularly increased, so as to induce the formation of a droplet or the incipient melting of the end of the welding wire.

3. The method according to Claim 1 or 2, **characterized in that** the welding wire (13) is moved back after having contacted the workpiece (16), thus detaching the droplet (32) or the incipiently melted material from the welding wire (13).

4. The method according to any one of Claims 1 to 3, **characterized in that** the duration of the individual welding process phases is controlled as a function of the adjusted welding current (I), in particular, directly proportionally to the adjusted welding current (I) or an adjusted power, respectively.

5. The method according to any one of Claims 1 to 4, **characterized in that** the ratio between the welding process phase having a high energy input and the welding process phase having a low energy input is changed as a function of the welding current (I) or an adjusted power, respectively.

6. The method according to any one of Claims 1 to 5, **characterized in that** at least one welding parameter of the heat input into the workpiece (16) to be worked is selected or adjusted on the welding device (1), wherein the ratio between the welding process phase having a high energy input and the welding process phase having a low energy input is automatically determined and controlled as a function of the selected or adjusted heat input value.

7. The method according to any one of Claims 1 to 6, **characterized in that** the ratio of the cyclically alternating welding process phases is determined as a function of the parameters used for the welding process such as, for example, a welding current (I) and/or a parameter for the heat input and/or the material of the workpiece (16) to be worked and/or the material of the welding wire (13) and/or the employed welding gas.

8. The method according to any one of Claims 1 to 7, **characterized in that** the welding process phase (28) having a low energy input is initiated by specifying the number of pulses in the pulse current phase (27) or by predetermining a time period or by a trigger signal.

9. The method according to any one of Claims 1 to 8, **characterized in that** the welding process is started according to the so-called lift-arc principle.

10. The method according to any one of Claims 1 to 9, **characterized in that** an additional welding process phase having a high energy input is implemented over a defined period upon ignition of the electric arc (15) and prior to the cyclic alternation of the at least two different welding process phases.

11. The method according to any one of Claims 1 to 10, **characterized in that** the energy input, in particular the welding current (I), during the cold-metal-transfer phase (28) is lower than the energy input, in particular the welding current (I), during the pulse current phase (27).

12. The method according to any one of Claims 1 to 11, **characterized in that** the wire advance speed is changed during the different welding process phases.

13. A welding device (1) including a welding current source (2), a control device (4), a welding torch (10) and a welding wire (13), in which the different welding parameters are adjustable via an input and/or output device (40) on the welding device, or via a remote controller, **characterized in that** an adjustment element for the adjustment of the heat balance or heat input into the workpiece (16) to be worked, via a cyclic combination of at least one welding process phase having a low energy input and a welding process phase having a high energy input, is arranged on the input and/or output device (40) of the welding device, and/or the remote controller, wherein said welding process phase having a low energy input is formed by a cold-metal-transfer phase (28), during which the welding wire (13) is conveyed in the direction of the workpiece (16) until contacting the same, and the wire conveyance is subsequently reversed after the creation of a short circuit, and the welding wire (13) is conveyed back as far as to a predefined distance (30) from the workpiece (16), wherein the welding process phase with high energy input is formed by a pulse current phase (27), wherein after a detachment of a droplet due to the pulse current phase (27), a welding current phase (I) passes to a base current phase (35), during which the welding current (I) is lowered to a base value to obtain the electric arc, and wherein the cold-metal-transfer phase (28) is carried out in the base current phase (35) of the pulse current phase (27).

14. The welding device according to Claim 13, **characterized by** an embodiment for carrying out the method according to any one or more of Claims 1 to 12.

15. The welding device according to Claim 13 or 14, **characterized in that** a further selection or adjustment element (46) is provided for the selection of the welding process phases to be used.

16. The welding device according to any one of Claims 13 to 15, **characterized in that** at least one display (42, 43, 44, 45) is provided for the representation of the selected welding parameters and/or the selected welding process phases.

17. The welding device according to any one of Claims 13 to 16, **characterized in that** a selection or adjustment element (46) is provided for the selection of the material of the workpiece (16) to be worked.

18. The welding device according to any one of Claims 13 to 17, **characterized in that** a selection or adjustment element (46) is provided for the selection of the material of the employed welding wire (13).

19. The welding device according to any one of Claims 13 to 18, **characterized in that** a selection or adjustment element (48) is provided for the adjustment of the ratio of the selected welding process phases, in particular, the duration of the respective welding process phase.

20. The welding device according to any one of Claims 16 to 19, **characterized in that** a memory is provided for the storage of welding parameter adjustments.

## Revendications

1. Procédé de commande et/ou de régulation d'un processus de soudage ou respectivement d'une source de courant de soudage, avec un fil de soudure, dans lequel, après l'allumage d'un arc électrique, un processus de soudage réglé à partir de plusieurs paramètres de soudage différents qui est commandé ou respectivement régulé par un dispositif de commande, est réalisé par une source de courant de soudage et, pendant le processus de soudage, au moins une phase de processus de soudage avec un apport d'énergie élevé et une phase de processus de soudage avec un apport d'énergie faible sont combinées de manière cyclique par différentes transferts de matière et/ou différents types d'arc électrique pour influencer ou commander le bilan thermique, en particulier l'apport de chaleur dans la pièce à usiner (16), **caractérisé en ce que**, en tant que phase de processus de soudage à faible apport d'énergie, une phase de transfert de métal à froid (28) est mise en oeuvre, pendant laquelle le fil de soudure (13) est déplacé en direction de la pièce (16) jusqu'à entrer en contact avec celle-ci puis, après la formation d'un court-circuit, le déplacement du fil est inversé et le fil de soudure (13) est ramené jusqu'à une distance (30) prédéfinie de la pièce (16), et **en ce que**, en tant que phase de processus de soudage avec apport d'énergie élevé, une phase de courant pulsé (27) est mise en oeuvre, un courant de soudage (I) passe, après un détachement de goutte par la phase de courant pulsé (27), en une phase de courant de base (35) pendant laquelle le courant de soudage (I) est abaissé à une valeur de base pour le maintien de l'arc électrique, et la phase de transfert de métal à froid (28) étant réalisée lors de la phase de courant de base (35) de la phase de courant pulsé (27).

2. Procédé selon la revendication 1, **caractérisé en ce que**, pendant le déplacement du fil de soudure (13) en direction de la pièce (16), le courant de soudage (I) est modifié, en particulier augmenté, et de ce fait une formation de goutte ou une fusion de l'extrémité du fil de soudure est obtenue.

3. Procédé selon la revendication 1 ou 2, **caractérisé en ce que** le fil de soudure (13), après le contact avec la pièce (16), est ramené en arrière, entraînant ainsi le détachement de la goutte (32) ou du matériau fondu du fil de soudure (13).

4. Procédé selon l'une quelconque des revendications 1 à 3, **caractérisé en ce que** la durée des différentes phases de processus de soudage est commandée en fonction du courant de soudage (I) réglé, en particulier de manière directement proportionnelle au courant de soudage (I) réglé, ou d'une puissance réglée.

5. Procédé selon l'une quelconque des revendications 1 à 4, **caractérisé en ce que** le rapport entre la phase de processus de soudage avec un apport d'énergie élevé et la phase de processus de soudage avec un apport d'énergie faible est modifié en fonction du courant de soudage (I) ou d'une puissance réglée.

6. Procédé selon l'une quelconque des revendications 1 à 5, **caractérisé en ce qu'**au moins un paramètre de soudage de l'apport de chaleur dans la pièce (16) à usiner est sélectionné ou réglé sur le poste de soudure (1), le rapport entre la phase de processus de soudage avec un apport d'énergie élevé et la phase de processus de soudage avec un apport d'énergie faible étant défini et réglé automatiquement selon la valeur de l'apport de chaleur sélectionnée ou réglée.

7. Procédé selon l'une quelconque des revendications 1 à 6, **caractérisé en ce que** le rapport des phases de processus de soudage à alternance cyclique est déterminé en fonction des paramètres pour le processus de soudage, par exemple un courant de soudage (I) et/ou un paramètre pour l'apport de chaleur et/ou le matériau de la pièce (16) à usiner et/ou le matériau du fil de soudure (13) et/ou le gaz de soudage utilisé.

8. Procédé selon l'une quelconque des revendications 1 à 7, **caractérisé en ce que** la phase de processus de soudage (28) avec un apport d'énergie faible est déclenchée par l'indication du nombre d'impulsions lors de la phase de courant pulsé (27) ou par la fixation d'une durée ou par un signal de déclenchement.

9. Procédé selon l'une quelconque des revendications 1 à 8, **caractérisé en ce que** le processus de soudage est lancé conformément à ce que l'on appelle le principe Lift-Arc.

10. Procédé selon l'une quelconque des revendications 1 à 9, **caractérisé en ce que**, après l'allumage de l'arc électrique (15) et avant l'alternance cyclique des au moins deux phases de processus de soudage différentes, une phase de processus de soudage supplémentaire avec apport d'énergie élevée a lieu pendant une durée définie.

11. Procédé selon l'une quelconque des revendications 1 à 10, **caractérisé en ce que** l'apport d'énergie, en particulier le courant de soudage (I), pendant la phase de transfert de métal à froid (28), est plus faible que l'apport d'énergie, en particulier le courant de soudage (I), pendant la phase de courant pulsé (27).

12. Procédé selon l'une quelconque des revendications 1 à 11, **caractérisé en ce que**, pendant les différentes phases de processus de soudage, la vitesse d'avance du fil est modifiée.

13. Poste de soudure (1) comprenant une source de courant de soudage (2), un dispositif de commande (4), un chalumeau (10) et un fil de soudure (13), dans lequel, par le biais d'un dispositif d'entrée et/ou de sortie (40) sur le poste de soudure ou par le biais d'un régulateur à distance, les différents paramètres de soudage peuvent être réglés, **caractérisé en ce que**, sur le dispositif d'entrée et/ou de sortie (40) du poste de soudure et/ou sur le régulateur à distance, un organe de réglage est disposé pour le réglage du bilan thermique ou de l'apport de chaleur dans la pièce (16) à usiner par le biais d'une combinaison cyclique d'au moins une phase de processus de soudage avec un apport d'énergie faible et une phase de processus de soudage avec un apport d'énergie élevée, la phase de processus de soudage avec apport d'énergie faible étant formée d'une phase de transfert de métal à froid (28), pendant laquelle le fil de soudure (13) est déplacé en direction de la pièce (16) jusqu'à entrer en contact avec celle-ci, puis, après la formation d'un court-circuit, le déplacement du fil est inversé et le fil de soudure (13) est ramené à une distance (30) prédéfinie de la pièce (16), la phase de processus de soudage avec apport d'énergie élevée étant formée d'une phase de courant pulsé (27), un courant de soudage (I) se transformant, après un détachement de goutte par la phase de courant pulsé (27), en une phase de courant de base (35) pendant laquelle le courant de soudage (I) est abaissé à une valeur de base pour le maintien de l'arc électrique, et la phase de transfert de métal à froid (28) étant réalisée lors de la phase de courant de base (35) de la phase de courant pulsé (27).

14. Poste de soudure selon la revendication 13, **caractérisé par** un mode de réalisation pour la réalisation du procédé selon l'une ou plusieurs quelconques des revendications 1 à 12.

15. Poste de soudure selon la revendication 13 ou 14, **caractérisé en ce qu'**un autre organe de sélection ou de réglage (46) est disposé pour la sélection des phases de processus de soudage à utiliser.

16. Poste de soudure selon l'une quelconque des revendications 13 à 15, **caractérisé en ce qu'**au moins un affichage (42, 43, 44, 45) est disposé pour la représentation des paramètres de soudage sélectionnés et, respectivement ou, des phases de processus de soudage sélectionnées.

17. Poste de soudure selon l'une quelconque des revendications 13 à 16, **caractérisé en ce qu'**un organe de sélection ou de réglage (46) est disposé pour la sélection du matériau de la pièce (16) à usiner.

18. Poste de soudure selon l'une quelconque des revendications 13 à 17, **caractérisé en ce qu'**un organe de sélection ou de réglage (46) est disposé pour la sélection du matériau du fil de soudure (13) utilisé.

19. Poste de soudure selon l'une quelconque des revendications 13 à 18, **caractérisé en ce qu'**un organe de sélection ou de réglage (48) est disposé pour le réglage du rapport des phases de processus de soudage sélectionnées, en particulier de la durée de la phase de processus de soudage respective.

20. Poste de soudure selon l'une quelconque des revendications 16 à 19, **caractérisé en ce qu'**une mémoire est disposée pour l'enregistrement de réglages des paramètres de soudage.
